(19) Europäisches Patentamt / European Patent Office / Office européen des brevets

(11) **EP 3 044 464 B1**

(12) **FASCICULE DE BREVET EUROPEEN**

(45) Date de publication et mention de la délivrance du brevet:
**21.10.2020 Bulletin 2020/43**

(21) Numéro de dépôt: **14755660.9**

(22) Date de dépôt: **25.08.2014**

(51) Int Cl.:
**F04D 15/00** (2006.01)     **F01D 5/20** (2006.01)
**F04D 29/16** (2006.01)     **F04D 29/18** (2006.01)
**F04D 29/24** (2006.01)     **F04D 29/52** (2006.01)
**F04D 29/54** (2006.01)     **F04D 29/68** (2006.01)
**F04D 31/00** (2006.01)     **F01D 1/20** (2006.01)
**F01D 5/14** (2006.01)

(86) Numéro de dépôt international:
**PCT/EP2014/067997**

(87) Numéro de publication internationale:
**WO 2015/036230 (19.03.2015 Gazette 2015/11)**

(54) **IMPULSEUR DE POMPE POLYPHASIQUE AVEC DES MOYENS D'AMPLIFICATION ET DE RÉPARTITION D'ÉCOULEMENTS DE JEU**

LAUFRAD FÜR MEHRPHASENPUMPE MIT MITTELN ZUR VERSTÄRKUNG UND VERTEILUNG VON SPALTSTRÖMUNGEN

MULTIPHASE PUMP IMPELLER WITH MEANS FOR AMPLIFYING AND DISTRIBUTING GAP FLOWS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2013 FR 1358724**

(43) Date de publication de la demande:
**20.07.2016 Bulletin 2016/29**

(73) Titulaire: **IFP Energies nouvelles**
**92500 Rueil-Malmaison (FR)**

(72) Inventeur: **PAGNIER, Philippe**
**F-38370 Saint Clair du Rhone (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**DE-A1- 2 255 193        FR-A1- 2 899 944**
**GB-A- 2 427 901         US-A1- 2008 080 972**
**US-A1- 2011 188 999**

EP 3 044 464 B1

## Description

La présente invention concerne le domaine du pompage de fluides multiphasiques.

Un dispositif de compression ou de détente d'un fluide, également appelé une pompe, est constitué d'au moins une cellule de compression qui comprend généralement deux parties : un impulseur (ou rotor) et un diffuseur. L'impulseur est monté sur un arbre tournant, par exemple en étant claveté ou fretté sur cet arbre. L'impulseur est formé d'un moyeu et d'au moins une aube, appelée également pale ou ailette. Le diffuseur est quant à lui statique et solidaire du corps de la machine. Classiquement, l'arbre est supporté en au moins deux points par des paliers solidaires de moyens de roulement inclus dans le corps de la pompe. Le montage en série de plusieurs de ces cellules constitue la cellule hydraulique de la pompe. De plus, la pompe comporte en outre une aspiration et un refoulement.

Les fluides multiphasiques, avant pompage et dans les conditions de pression et de température considérées, peuvent être constitués du mélange notamment d'un liquide et d'un gaz dissous ou non dissous dans le liquide. Le fluide multiphasique peut être notamment un effluent diphasique pétrolier composé d'un mélange d'huile et de gaz.

Dans le cas de turbomachines rotodynamiques conventionnelles (compresseurs, pompes, turbines), l'espace situé entre l'extrémité des aubages du rotor (partie tournante) et le corps de la machine (partie fixe) fait l'objet de soins particuliers lors de la conception. En effet, cet espace nécessaire à la mise en rotation du rotor, est le siège d'écoulements spécifiques générant des pertes de pression totale de l'écoulement, et finalement, une dégradation du rendement de la machine.

Par exemple, un compresseur classique d'une puissance de 400 MW pour un cycle combiné, avec des jeux représentant entre 1 et 3 % de la hauteur de l'aube, subit une perte de rendement de 1 % au minimum, soit 4 MW. C'est pourquoi une attention particulière est portée par les concepteurs sur le dimensionnement du jeu des rotors ou les moyens de le réduire.

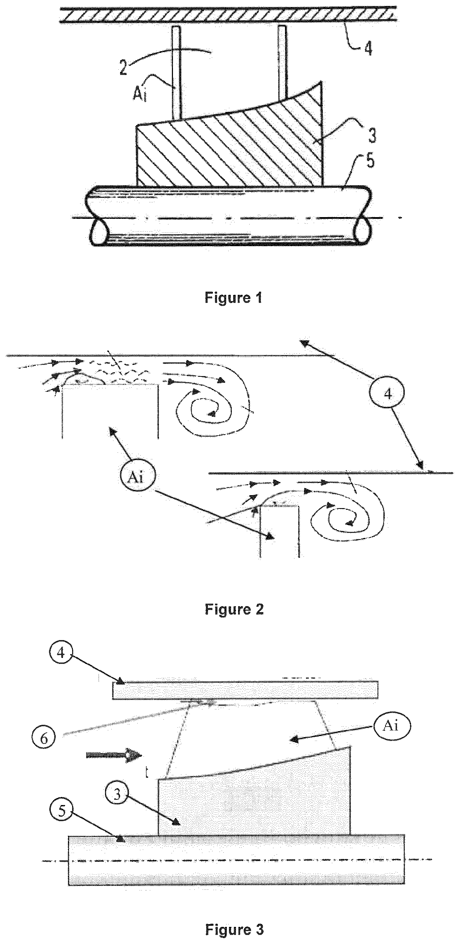

La figure 1 donne à titre d'exemple, l'image d'un rotor d'un étage de compresseur classique. Celui-ci comporte un moyeu (3) convergent solidaire de l'arbre de rotation (5) sur lequel sont montés des aubages (Ai). Le rotor est placé dans le carter (4) de la machine qui constitue une enveloppe cylindrique ou plus généralement une enveloppe de révolution. Afin de permettre la rotation du rotor, un jeu est laissé entre l'extrémité des aubages (Ai) et le carter cylindrique (4). Généralement, ce jeu est quantifié dans la littérature de manière relative en pourcentage de la hauteur d'aube ou en pourcentage de la corde de l'aubage, ou de manière absolue en dixièmes de millimètres.

Typiquement, dans le cas d'un compresseur, le jeu représente 0,1 à 0,3 millimètres, soit généralement moins de 1 % de la hauteur d'aube pour le cas de compresseur basse pression (grande hauteur d'aubes) et jusqu'à 6 à 10 % pour le cas de compresseur haute pression (faible hauteur d'aubes). Ce jeu est le siège d'écoulements conduisant à une dégradation des performances de la machine pouvant aller jusqu'à une de perte de 4 points de rendement.

En effet, de l'énergie mécanique est transférée au fluide par l'intermédiaire des aubages solidaires de l'arbre de rotation, sous la forme d'énergie cinétique (mise en rotation du fluide) et d'énergie de pression (liée à la forme divergente des canaux formés par les aubages). Classiquement, les aubages sont cambrés à la manière de profils d'ailes d'avion, ce qui permet de générer une force de portance et une force de trainée, dont le point d'application est en rotation autour de l'arbre. Il y a donc bien un travail transmis au fluide. La forme des aubages crée un gradient de pression transversal dans le canal inter-aubes, dirigé du côté en surpression des aubages vers le côté en dépression. Le fluide subit donc deux gradients de pression : l'un transversal dû à la forme des aubages, le second, longitudinal (de l'entrée à la sortie du rotor), lié à l'énergie fournie par l'intermédiaire de l'arbre en rotation. Par ailleurs, le développement de couches visqueuses le long du moyeu et des aubages associées aux effets de la rotation du rotor (force centrifuge et force de Coriolis), produit des écoulements secondaires classiquement rencontrés dans les turbomachines rotodynamiques. A ces écoulements secondaires, s'associent l'écoulement de jeu généré par la différence de pression situé entre le côté en surpression de l'aubage et son côté en dépression.

L'ouvrage : "Fluid Dynamics and heat transfer of turbomachinery" - B. Lakshminarayana - Wiley Interscience Publication - 1996, présente les différents écoulements générés dans une pompe, il s'agit notamment d' :

- écoulement secondaire localisé au moyeu, dirigé du côté en surpression vers le côté en dépression. Il est lié au développement des couches limites sur le moyeu associé au gradient de pression transversal ;
- écoulements secondaires radiaux le long des aubages générés par le développement des couches limites le long des aubages conjugué à l'effet de la force centrifuge, de la force de Coriolis et aux effets du gradient de pression transversal ;
- écoulement de coin situé vers le moyeu sur le côté en dépression de l'aubage. Il est le siège de l'interaction de l'écoulement du moyeu avec l'écoulement du contournement des aubages ;
- écoulement de jeu situé au niveau de l'extrémité des aubages.

La différence de pression de chaque côté de l'aubage génère un écoulement à l'extrémité de l'aubage (figure 2), dont le débit dépend de l'épaisseur de l'aubage et de la dimension du jeu et également de la viscosité du fluide. La figure 2 représente les écoulements pour un aubage (Ai) épais (figure de gauche) et pour un aubage (Ai) plus fin (figure de droite). A l'entrée du jeu, le contournement de l'aubage produit un décollement pouvant induire une restriction de l'écoulement jusqu'à 60 % du jeu. En fonction de l'épaisseur de l'aubage, le décollement peut être plus ou moins imposant avec un recollement possible le long de l'épaisseur. A la sortie du jeu, l'interaction entre l'écoulement radial développé le long du côté en dépression de l'aubage, et l'écoulement de jeu, produit un tourbillon appelé "tourbillon de jeu".

Dans le cas de machines conventionnelles monophasiques (compresseurs, pompes), le concepteur cherche à réduire les effets de l'écoulement de jeu sur le rendement de la machine. Plusieurs solutions ont été envisagées pour pallier ce problème :

- réaliser des rainures de formes diverses dans le carter de la machine, au regard du passage des aubages du rotor, afin "d'absorber" l'écoulement de jeu et de supprimer le tourbillon de jeu,
- placer une enveloppe frettée sur le rotor. L'avantage de cette solution est effectivement de supprimer l'écoulement de jeu dans le rotor. En revanche, ce dispositif produit un écoulement de fuite situé entre la frette et le carter de la machine, lié au gradient de pression longitudinal (pression plus élevée en sortie du rotor qu'à son entrée). Ainsi, il se produit un écoulement de recirculation situé vers le carter, remontant vers l'amont et venant impacter l'écoulement à l'entrée du rotor. Un tel type de dispositif est décrit notamment dans les demandes de brevets FR 2 787 836 et FR 2 787 837.

De plus, la demande de brevet US 2008/0080972 A1 décrit une turbomachine, pour laquelle le carter comporter des cavités dans la zone d'interface avec une pièce mobile, afin d'entraver les écoulements.

En outre, la demande de brevet FR 2899944 concerne une pompe polyphasique compacte, pour laquelle les roues mobiles comportent un nombre restreint d'aubages et présentent une entrée quasi axiale et une sortie semi-radiale.

Par ailleurs, une pompe polyphasique doit assurer un bon mélange liquide/gaz.

L'objet de l'invention concerne donc un impulseur polyphasique (rotor) de compression ou de détente apte à être inséré dans un carter d'une pompe polyphasique. La forme des aubes de l'impulseur est déterminée de manière à amplifier et à répartir les écoulements de jeu entre l'aube et le carter, contrairement aux pompes de l'art antérieur qui souhaitaient diminuer ces écoulements. Grâce à l'invention, l'écoulement de jeu est concentré dans une zone précise. Ainsi, l'impulseur permet un bon mélange du liquide et du gaz et une bonne efficacité diphasique.

## Le dispositif selon l'invention

L'invention concerne un impulseur polyphasique hélico-radio-axial de compression ou de détente selon la revendication 1 comportant au moins une aube montée sur un moyeu, ledit impulseur polyphasique étant apte à être disposé dans un carter d'un dispositif de compression ou de détente d'un fluide polyphasique. Ladite aube comporte des moyens d'amplification et de répartition d'écoulements de jeu entre ladite aube et ledit carter.

Selon l'invention, lesdits moyens d'amplification et de répartition comportent au moins une zone où le jeu entre ledit carter et ladite aube est augmenté par rapport audit jeu au niveau des extrémités de ladite aube.

Avantageusement, le jeu entre ladite aube et ledit carter varie dans la direction longitudinale ou la direction curviligne dudit impulseur.

De préférence, ledit jeu entre ladite aube et ledit carter est augmenté dans la zone où la différence de pression entre le côté en surpression et le côté en dépression de ladite aube est maximum.

De manière avantageuse, ledit jeu est maximum sur une longueur de l'aube commençant à sensiblement 20% de la longueur longitudinale de ladite aube.

De plus, ledit jeu peut être minimal au niveau du bord d'attaque et du bord de fuite de ladite aube.

Selon une variante de réalisation, ledit jeu est réalisé par au moins une rainure formée sur l'extrémité radiale de ladite aube.

Selon l'invention, ledit jeu est réalisé par une variation continue du jeu entre ladite aube et ledit carter, et/ ou lesdits moyens d'amplification et de répartition comportent au moins une zone où l'épaisseur de ladite aube est diminuée par rapport à l'épaisseur au niveau des extrémités de ladite aube.

Selon un mode de réalisation de l'invention, lesdits moyens d'amplification et de répartition comportent une courbure de l'extrémité d'au moins une face du profil transversal de ladite aube dans la direction de moindre pression.

De préférence, les deux extrémités des deux faces du profil transversal sont incurvées dans la direction de moindre pression.

L'invention concerne en outre un dispositif de compression ou de détente d'un fluide polyphasique comportant au moins une phase liquide et une phase gazeuse, caractérisé en ce que ledit dispositif comporte un carter et au moins un impulseur selon l'invention.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre un rotor d'un étage d'un compresseur selon l'art antérieur.

La figure 2, déjà décrite, illustre un écoulement typique se produisant dans le jeu séparant l'extrémité d'un aubage d'un rotor du carter de la pompe pour deux aubages d'épaisseur différente.

La figure 3 illustre un rotor selon une première variante du premier mode de réalisation de l'invention.

La figure 4 illustre un rotor selon une deuxième variante du premier mode de réalisation de l'invention.

La figure 5 représente la distribution de l'épaisseur de l'aubage pour un rotor selon l'art antérieur (AA) et selon un deuxième mode de réalisation de l'invention (INV).

La figure 6 représente la forme incurvée de l'aubage pour un rotor selon l'art antérieur (AA) et selon un troisième mode de réalisation de l'invention (INV).

La figure 7 représente une aube.

**Description détaillée de l'invention**

L'objet de l'invention concerne un impulseur polyphasique de compression ou de détente apte à être inséré dans un carter d'une pompe polyphasique. L'impulseur polyphasique (rotor) comporte au moins une aube montée sur un moyeu. Selon l'invention, l'aube comporte des moyens d'amplification et de répartition d'écoulements de jeu entre l'aube et le carter : la forme des aubes de l'impulseur est déterminée de manière à amplifier les écoulements de jeu entre l'aube et le carter. En effet, pour le cas de pompes polyphasiques, on cherche à exploiter l'écoulement de jeu afin de favoriser le mélange liquide / gaz, contrairement au cas des pompes monophasiques pour lesquels on essaie de réduire ou de supprimer ces écoulements.

Les objectifs de la présente invention consistent donc à gérer et à contrôler l'écoulement de jeu afin de positionner judicieusement le tourbillon de jeu dans le canal inter-aubes dans le but de favoriser le mélange liquide/gaz.

L'écoulement de jeu au niveau de l'extrémité des aubages du rotor est la source des phénomènes suivants :

- tourbillon de jeu se propageant dans le canal inter-aubes et pouvant impacter l'écoulement ;
- contribution au développement des écoulements de recirculation qui se produisent à débit partiel et qui se caractérisent par un reflux de l'écoulement vers l'amont de l'étage de compression ;
- modifications des profils de pression sur les surfaces des aubages ;
- modification de l'écoulement à la sortie du rotor.

Les paramètres influençant ces phénomènes sont notamment :

- la dimension du jeu entre le carter et l'aube ;
- l'épaisseur des aubages au niveau du carter ;

- la différence de pression entre chaque côté des aubages, liée directement aux paramètres géométriques du rotor (la cambrure des aubages entre autres) ;
- les conditions opératoires de la turbomachine : en particulier le débit.

La détermination de la forme des aubes du rotor afin d'amplifier les écoulements de jeu entre l'aube et le carter consiste donc à ajuster ces paramètres influents : la forme et les dimensions du jeu entre le carter et l'aube et/ou l'épaisseur des aubes et/ou la forme des aubes au niveau du carter.

Dans la suite de la description, on désigne par "fluide" un fluide multiphasique comportant notamment une phase liquide et une phase gazeuse ainsi qu'éventuellement des particules solides par exemple du sable ou des particules visqueuses tel que des agglomérats d'hydrates. La phase liquide peut être constituée de plusieurs liquides de natures différentes, de même, la phase gazeuse peut être constituée de plusieurs gaz de natures différentes. Le fluide multiphasique peut être notamment un effluent diphasique pétrolier composé d'un mélange d'huile et de gaz.

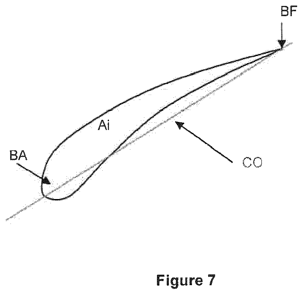

On a représenté sur la figure 7, les différents termes géométriques caractérisant une aube (2) : la longueur longitudinale est la longueur de l'aube (tridimensionnelle) sur un plan passant par l'axe de rotation de la pompe, le bord d'attaque (BA) "attaque" l'écoulement, il est situé face à l'écoulement, le bord de fuite (BF) est situé en sortie du rotor, et la corde (CO) de l'aube est une ligne imaginaire, passant par le bord d'attaque et le bord de fuite de l'aube.

Selon un premier mode de réalisation de l'invention, les moyens d'amplification et de répartition comportent au moins une zone où le jeu entre le carter et l'aube est augmenté par rapport au jeu au niveau des extrémités de l'aube. Pour cela, la forme de l'aube est déterminée de telle sorte que le jeu entre l'aube et le carter varie dans la direction longitudinale de l'impulseur.

Ce mode de réalisation consiste à faire varier le jeu en bout d'aubages du rotor en fonction de l'abscisse curviligne. Habituellement le jeu est constant et représente environ moins de 1% de la hauteur d'aubes ou quelques dixièmes de millimètres. Ici, il s'agit de :

- augmenter le jeu à l'endroit où la différence de pression entre le côté en surpression et le côté en dépression de l'aubage est maximum ;
- conserver la valeur minimale du jeu au niveau du bord d'attaque des aubages (fixée par les tolérances de fabrication) de manière à réduire l'écoulement de recirculation à l'entrée du rotor ; et
- réduire au minimum le jeu sur la seconde partie axiale des aubages car les écoulements secondaires y sont déjà générés et il n'est plus nécessaire de les alimenter avec l'écoulement de jeu.

Ce jeu peut être réalisé par la forme extérieure de l'aube.

Selon une première variante du premier mode de réalisation illustré en figure 3, le jeu entre l'aube et le carter varie continuellement (6). Sur cette figure, la flèche en gras indique le sens de l'écoulement du fluide. Avantageusement, le jeu augmente à l'endroit où la différence de pression entre le côté en surpression et le côté en dépression de l'aube est maximum, de préférence sensiblement à 20% de la longueur longitudinale de l'aube. De plus, le jeu peut être minimal au niveau du bord d'attaque et du bord de fuite de l'aube.

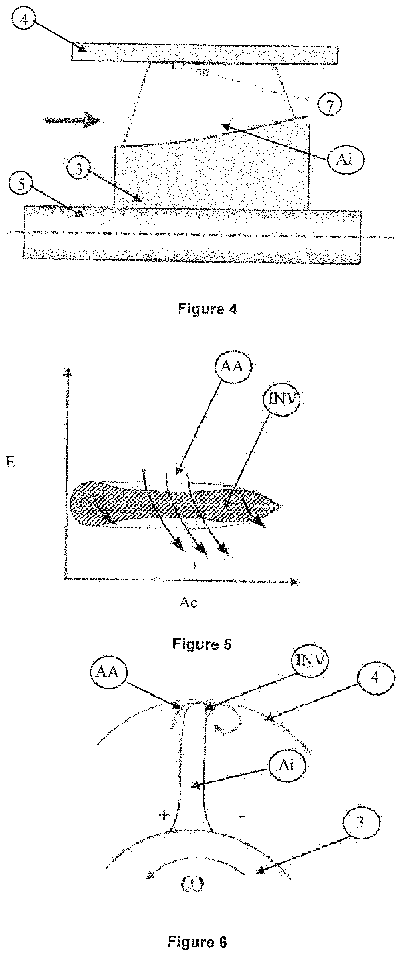

Alternativement, et tel qu'illustré en figure 4, ce mode de réalisation peut consister à pratiquer une ou plusieurs rainures (7) sur l'extrémité des aubages (et non dans le carter de la pompe comme proposé dans l'art antérieur). Sur cette figure, la flèche en gras indique le sens de l'écoulement du fluide. Avantageusement, la ou les rainures sont disposées en aval du bord d'attaque. Par exemple, la première rainure peut être située à 20% de la longueur longitudinale de l'aube.

Les rainures (7) ou l'augmentation du jeu (6) à environ 20 % de la corde peuvent être orientées selon un angle par rapport à la corde de l'aubage, de manière à fixer l'orientation du tourbillon de jeu dans le canal.

La largeur du dispositif peut être réglée en fonction du gain de pression réalisé par le rotor, de manière à ce que le tourbillon de jeu puisse se développer suffisamment pour assurer localement, dans le canal et au niveau du carter, le mélange liquide gaz. Le tourbillon ne doit pas s'étendre à l'aubage précédent si l'on veut éviter une dégradation du rendement.

De plus, la disposition du jeu permet d'une part, de limiter l'écoulement de recirculation au niveau des bords d'attaque de l'aube vers l'amont, et d'autre part, de réduire le tourbillon de jeu au niveau des bords de fuite.

Selon un deuxième mode de réalisation de l'invention, les moyens d'amplification et de répartition comportent au moins une zone où l'épaisseur de l'aube est diminuée par rapport à l'épaisseur au niveau des extrémités de l'aube : l'épaisseur de l'aube en tête varie en fonction de l'abscisse curviligne. L'abscisse curviligne est définie comme étant la longueur développée le long de l'aube en suivant sa ligne squelette, comptée à partir du bord d'attaque. En d'autres termes, on peut définir l'abscisse curviligne m par l'expression suivante :

$$dm = \sqrt{dz^2 + d(r\theta)^2}$$ où dz est l'élément de longueur dans la direction axiale de l'aube, d(rθ) est l'élément de longueur dans la direction tangentielle ; r étant le rayon, θ l'angle azimutal autour de l'axe de rotation de la machine.

Avantageusement, selon la direction de l'abscisse curviligne de l'aube (c'est à dire, le long de l'aube), l'épaisseur de celle-ci au voisinage du bord d'attaque et au voisinage du bord de fuite, est supérieure à l'épaisseur de ladite aube en son centre. Plus précisément, ce mode de réalisation de l'invention consiste à conserver ou à augmenter l'épaisseur aux extrémités et de réduire l'épaisseur au centre des aubages. La figure 5 montre un exemple de la distribution de l'épaisseur (E) de l'aubage en tête en fonction de l'abscisse curviligne (Ac) pour une aube selon l'art antérieur (AA) et pour une aube selon ce deuxième mode de réalisation (INV). Sur la figure, les flèches représentent les écoulements pour l'aube selon ce deuxième mode de réalisation (INV).

Cette nouvelle disposition permet de conserver ou d'augmenter les pertes de charges dans le jeu au niveau du bord d'attaque et du bord de fuite, et de les réduire au milieu de l'aubage (à l'endroit où l'épaisseur est plus faible). Ainsi cela contribue à augmenter le débit de jeu au centre des aubages. Elle permet également de réduire l'écoulement de recirculation provenant du bord d'attaque vers l'amont (source de réduction du gain de pression à débit réduit), de réduire l'impact du tourbillon de jeu au niveau du bord de fuite sur l'écoulement en sortie du rotor.

Enfin, la réduction de l'épaisseur de l'aubage aux endroits où l'on souhaite favoriser l'écoulement de jeu, permet également de réduire la zone de mélange dans le jeu et de favoriser ainsi le développement du tourbillon à la sortie du jeu.

Selon un troisième mode de réalisation de l'invention, les moyens d'amplification et de répartition comportent une courbure de l'extrémité d'au moins une face du profil transversal de l'aube dans la direction de moindre pression la forme de l'aube en vue transversale, c'est à dire dans une vue dans un plan perpendiculaire à l'axe de rotation de la machine. Cette forme est adaptée pour amplifier les écoulements de jeu entre l'aube et le carter. Avantageusement, une extrémité d'au moins une face du profil transversal de l'aube est incurvée dans la direction de moindre pression. De préférence, les deux extrémités du profil transversal de l'aube sont incurvées dans la direction de moindre pression.

La figure 6 illustre la forme d'une aube (Ai) en vue de face selon l'art antérieur (AA) et selon ce troisième mode de réalisation (INV). Les aubages ont habituellement des profils rectangulaires aux extrémités (AA). Dans le cadre du troisième mode de réalisation (INV), les aubages sont incurvés légèrement dans la direction de moindre pression, au niveau du carter. Il est également possible de n'incurver qu'une seule face de l'aubage. Par exemple, la face en surpression peut être incurvée tandis que la face en dépression peut rester rectangulaire.

Cette disposition a pour but de favoriser l'écoulement de jeu à partir de l'écoulement secondaire radial qui se développe le long de l'aubage sur son côté en surpression. Elle permet aussi de réduire le décollement, source de perte de pression dans l'écoulement de jeu.

Les modes de réalisation de l'invention présentés ci-dessus peuvent être combinés deux par deux ou tous ensemble notamment pour combiner leurs effets sur l'écoulement et permettre un bon mélange du liquide et du gaz.

Les améliorations proposées au niveau du jeu rotor / carter de la machine, ne modifient pas les profils de vitesse à la sortie du rotor. Le gain de pression n'est donc pas affecté par rapport à la forme originale d'une cellule conventionnelle.

En revanche, le contrôle de l'écoulement de jeu a pour but d'optimiser le tourbillon de jeu et non pour le supprimer. Il permet de profiter au maximum de ses effets bénéfiques pour assurer un mélange liquide /gaz, avec une meilleure gestion des pertes de rendement.

Les effets observés sont donc :

- en écoulement monophasique, maintien ou amélioration du rendement d'une pompe polyphasique et conservation du gain de pression global réalisé par l'étage de compression. En général, les pertes de pression totale liées à l'écoulement de fuite au niveau du jeu, représentent en général un cout d'une dizaine de points de rendement en monophasique (2 à 4 points pour un compresseur classique). Ici, les modifications proposées améliorent légèrement le rendement de la pompe polyphasique car il s'agit de répartir judicieusement le débit de fuite, et non pas de l'augmenter ;
- augmentation de l'efficacité diphasique de quelques points, en positionnant judicieusement le tourbillon de jeu dans le canal inter-aubes ;
- réduction des effets néfastes des écoulements de recirculation observés en amont du rotor, à débit réduit. On rappelle que les écoulements de recirculation sont générés au niveau du carter, pour des bas débits. Ils remontent la conduite d'entrée et viennent perturber l'écoulement arrivant sur le rotor.

Les aubes selon les trois modes de réalisation peuvent être rapportées et fixées au moyeu par soudure ou les aubes et le moyeu peuvent être réalisés ensemble par moulage ou fraisage.

En outre, l'invention concerne un dispositif de compression ou de détente d'un fluide polyphasique (une pompe polyphasique) comportant au moins un carter et une cellule de compression comprenant au moins un impulseur tel que défini précédemment. L'impulseur est monté sur un arbre tournant, par exemple en étant claveté ou fretté sur cet arbre. L'impulseur est formé d'un moyeu et d'au moins une aube. Le diffuseur est quant à lui statique et solidaire du corps de la machine. Classiquement, l'arbre est supporté en au moins deux points par des paliers solidaires de moyens de roulement inclus dans le corps de la pompe. Le montage en série de plusieurs de ces cellules constitue la cellule hydraulique de la pompe. Celle-ci comporte en outre une aspiration et un refoulement.

La pompe selon l'invention peut être utilisée notamment pour le pompage d'un effluent pétrolier diphasique, constitué d'un mélange d'huile et de gaz.

## Revendications

1. Impulseur polyphasique hélico-radio-axial de compression ou de détente comportant au moins une aube (Ai) montée sur un moyeu (3), ledit impulseur polyphasique étant apte à être disposé dans un carter (4) d'un dispositif de compression ou de détente d'un fluide polyphasique, **caractérisé en ce que** ladite aube (Ai) comporte des moyens d'amplification et de répartition d'écoulements de jeu entre ladite aube (Ai) et ledit carter (4), lesdits moyens d'amplification et de répartition d'écoulements de jeu comportant au moins une zone où le jeu entre ledit carter (4) et ladite aube (Ai) est augmenté par rapport audit jeu au niveau des extrémités de ladite aube (Ai), le jeu étant réalisée par une variation continue du jeu (6) entre ladite aube (Ai) et ledit carter (4), et/ou lesdits moyens d'amplification et de répartition d'écoulements de jeu comportant au moins une zone où l'épaisseur de ladite aube (Ai) est diminuée par rapport à l'épaisseur au niveau des extrémités de ladite aube (Ai).

2. Impulseur selon la revendication 1, dans lequel le jeu entre ladite aube (Ai) et ledit carter (4) varie dans la direction longitudinale ou la direction curviligne dudit impulseur.

3. Impulseur selon la revendication 2, dans lequel ledit jeu entre ladite aube (Ai) et ledit carter (4) est augmenté dans la zone où la différence de pression entre le côté en surpression et le côté en dépression de ladite aube (Ai) est maximum.

4. Impulseur selon l'une des revendications 1 à 3, dans lequel ledit jeu est maximum sur une longueur de l'aube commençant à sensiblement 20% de la longueur longitudinale de ladite aube (Ai).

5. Impulseur selon l'une des revendications 1 à 4, dans lequel ledit jeu est minimal au niveau du bord d'attaque et du bord de fuite de ladite aube (Ai).

6. Impulseur selon l'une des revendications 1 à 5, dans lequel ledit jeu est réalisé par au moins une rainure (7) formée sur l'extrémité radiale de ladite aube (Ai).

7. Impulseur selon l'une des revendications précédentes, dans lequel lesdits moyens d'amplification et de répartition comportent une courbure de l'extrémité d'au moins une face du profil transversal de ladite aube (Ai) dans la direction de moindre pression.

8. Impulseur selon la revendication 7, dans lequel les deux extrémités des deux faces du profil transversal sont incurvées dans la direction de moindre pression.

**9.** Dispositif de compression ou de détente d'un fluide polyphasique comportant au moins une phase liquide et une phase gazeuse, **caractérisé en ce que** ledit dispositif comporte un carter (4) et au moins un impulseur selon l'une des revendications précédentes.

**Patentansprüche**

**1.** Helico-radio-axiales Mehrphasenlaufrad zur Kompression oder Ausdehnung aufweisend mindestens eine Schaufel (Ai), die an einer Nabe (3) angebracht ist, wobei das Mehrphasenlaufrad geeignet ist, in einem Gehäuse (4) einer Vorrichtung zur Kompression oder Ausdehnung eines Mehrphasenfluids angeordnet zu sein, **dadurch gekennzeichnet, dass** die Schaufel (Ai) Mittel zur Verstärkung und Verteilung von Spaltströmungen zwischen der Schaufel (Ai) und dem Gehäuse (4) aufweist, wobei die Mittel zur Verstärkung und Verteilung von Spaltströmungen mindestens einen Bereich aufweisen, wo der Spalt zwischen dem Gehäuse (4) und der Schaufel (Ai) bezogen auf den Spalt an den Enden der Schaufel (Ai) vergrößert ist, wobei der Spalt von einer durchgehenden Variation des Spalts (6) zwischen der Schaufel (Ai) und dem Gehäuse (4) gebildet ist, und/oder die Mittel zur Verstärkung und Verteilung von Spaltströmungen mindestens einen Bereich aufweisen, wo die Dicke der Schaufel (Ai) bezogen auf die Dicke an den Enden der Schaufel (Ai) verringert ist.

**2.** Laufrad nach Anspruch 1, wobei der Spalt zwischen der Schaufel (Ai) und dem Gehäuse (4) in der Längsrichtung oder krummlinigen Richtung des Laufrads variiert.

**3.** Laufrad nach Anspruch 2, wobei der Spalt zwischen der Schaufel (Ai) und dem Gehäuse (4) in dem Bereich vergrößert ist, wo die Druckdifferenz zwischen der Überdruckseite und der Unterdruckseite der Schaufel (Ai) maximal ist.

**4.** Laufrad nach einem der Ansprüche 1 bis 3, wobei der Spalt auf einer Länge der Schaufel maximal ist, die im Wesentlichen bei 20 % der Länge in Längsrichtung der Schaufel (Ai) beginnt.

**5.** Laufrad nach einem der Ansprüche 1 bis 4, wobei der Spalt an der Vorderkante und der Hinterkante der Schaufel (Ai) minimal ist.

**6.** Laufrad nach einem der Ansprüche 1 bis 5, wobei der Spalt von mindestens einer Nut (7) gebildet ist, die auf dem Radialende der Schaufel (Ai) ausgebildet ist.

**7.** Laufrad nach einem der vorhergehenden Ansprüche, wobei die Mittel zur Verstärkung und Verteilung eine Krümmung des Endes mindestens einer Fläche des Querprofils der Schaufel (Ai) in der Richtung des geringeren Drucks aufweisen.

**8.** Laufrad nach Anspruch 7, wobei die zwei Enden der zwei Flächen des Querprofils in der Richtung des geringeren Drucks gekrümmt sind.

**9.** Vorrichtung zur Kompression oder Ausdehnung eines Mehrphasenfluids aufweisend mindestens eine flüssige Phase und eine Gasphase, **dadurch gekennzeichnet, dass** die Vorrichtung ein Gehäuse (4) und mindestens ein Laufrad nach einem der vorhergehenden Ansprüche aufweist.

**Claims**

**1.** Helico-radio-axial multiphase compression or expansion impeller having at least one blade (Ai) mounted on a hub (3), said multiphase impeller being able to be disposed in a casing (4) of a device for compressing or expanding a multiphase fluid, **characterized in that** said blade (Ai) has means for amplifying and distributing clearance flows between said blade (Ai) and said casing (4), said means for amplifying and distributing clearance flows having at least one zone in which the clearance between said casing (4) and said blade (Ai) is increased compared with said clearance at the ends of said blade (Ai), the clearance being formed by a continuous variation in the clearance (6) between said blade (Ai) and said casing (4), and/or said means for amplifying and distributing clearance flows having at least one zone in which the thickness of said blade (Ai) is reduced compared with the thickness at the ends of said blade (Ai).

**2.** Impeller according to Claim 1, wherein the clearance between said blade (Ai) and said casing (4) varies in the longitudinal direction or the curvilinear direction of said impeller.

**3.** Impeller according to Claim 2, wherein said clearance between said blade (Ai) and said casing (4) is increased in the zone in which the pressure difference between the pressure side and the suction side of said blade (Ai) is at a maximum.

**4.** Impeller according to one of Claims 1 to 3, wherein said clearance is at a maximum along a length of the blade starting at approximately 20% of the longitudinal length of said blade (Ai).

**5.** Impeller according to one of Claims 1 to 4, wherein said clearance is at a minimum at the leading edge and the trailing edge of said blade (Ai) .

6. Impeller according to one of Claims 1 to 5, wherein said clearance is realized by at least one groove (7) formed at the radial end of said blade (Ai) .

7. Impeller according to one of the preceding claims, wherein said amplification and distribution means have a curvature from the end of at least one face of the transverse profile of said blade (Ai) in the direction of lower pressure.

8. Impeller according to Claim 7, wherein the two ends of the two faces of the transverse profile are curved in the direction of lower pressure.

9. Device for compressing or expanding a multiphase fluid having at least one liquid phase and one gas phase, **characterized in that** said device has a casing (4) and at least one impeller according to one of the preceding claims.

Figure 1

Figure 2

Figure 3

**Figure 4**

**Figure 5**

**Figure 6**

**Figure 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2787836
- FR 2787837

- US 20080080972 A1
- FR 2899944

**Littérature non-brevet citée dans la description**

- **B. LAKSHMINARAYANA.** Fluid Dynamics and heat transfer of turbomachinery. Wiley Interscience, 1996